# EUROPÄISCHE PATENTSCHRIFT

(11) **EP 3 548 707 B1**
(45) Veröffentlichungstag und Bekanntmachung des Hinweises auf die Patenterteilung: **29.11.2023**
(21) Anmeldenummer: 17757772.3
(22) Anmeldetag: 28.08.2017
(51) Int. Cl.: F01D 11/00, F01D 17/16, F01D 25/24, F02B 37/24, F02C 6/12

(54) **TURBOLADER MIT DICHTFLÄCHEN ZWISCHEN DÜSENRING UND TURBINENGEHÄUSE**
TURBOCHARGER WITH A SEALING SURFACE BETWEEN THE NOZZLE RING AND THE TURBINE HOUSING
TURBOCHARGEUR AVEC UN JOINT D´ÉTANCHÉITÉ ENTRE L'ANNEAU DE BUSES ET LE COMPARTIMENT DE LA TURBINE

(30) Priorität: 01.12.2016 DE 102016123249
(43) Veröffentlichungstag der Anmeldung: 09.10.2019
(73) Patentinhaber: MAN Energy Solutions SE, 86153 Augsburg (DE)
(72) Erfinder: HOSSBACH, Björn, 86420 Diedorf (DE); WEISBROD, Tobias, 86150 Augsburg (DE); SCHORER, Paul, 89362 Offingen (DE); REZANINA, Jan, 67571 Namest nad Oslavou (CZ); BOZEK, Lukas, 66483 Pribyslavice (CZ)
(86) Internationale Anmeldenummer: PCT/EP2017/071511
(87) Internationale Veröffentlichungsnummer: WO 2018/099618

(56) Entgegenhaltungen:
- EP-A1- 0 080 810
- EP-A1- 1 428 983
- EP-A1- 1 988 261
- EP-A1- 2 620 613
- WO-A2-2011/139582
- JP-A- 2012 117 483
- JP-U- S5 932 131
- JP-U- H01 111 144
- US-A1- 2006 034 684

## Beschreibung

Die Erfindung betrifft einen Turbolader.

Aus der DE 10 2013 002 605 A1 ist der grundsätzliche Aufbau eines Turboladers bekannt. Ein Turbolader verfügt über eine Turbine, in der ein erstes Medium entspannt wird. Ferner verfügt ein Turbolader über einen Verdichter, in dem ein zweites Medium verdichtet wird, und zwar unter Nutzung der in der Turbine bei der Entspannung des ersten Mediums gewonnenen Energie. Die Turbine des Turboladers verfügt über ein Turbinengehäuse sowie einen Turbinenrotor. Der Verdichter des Turboladers verfügt über ein Verdichtergehäuse sowie einen Verdichterrotor. Zwischen dem Turbinengehäuse der Turbine und dem Verdichtergehäuse des Verdichters ist ein Lagergehäuse positioniert, wobei das Lagergehäuse einerseits mit dem Turbinengehäuse und andererseits mit dem Verdichtergehäuse verbunden ist. Im Lagergehäuse ist eine Welle gelagert, über die der Turbinenrotor mit dem Verdichterrotor gekoppelt ist.

Aus der Praxis ist es bekannt, dass das Turbinengehäuse der Turbine, nämlich ein sogenanntes Turbinenzuströmgehäuse, sowie das Lagergehäuse über eine vorzugsweise als Spannpratze ausgebildete Befestigungseinrichtung miteinander verbunden sind. Eine derartige, vorzugsweise als Spannpratze ausgebildete Befestigungseinrichtung ist mit einem ersten Abschnitt derselben an einem Flansch des Turbinengehäuses über Befestigungsmittel montiert und überdeckt mit einem zweiten Abschnitt einen Flansch des Lagergehäuses zumindest abschnittsweise. Über eine derartige Befestigungseinrichtung wird der Verband bzw. Verbund aus Lagergehäuse und Turbinengehäuse verspannt, insbesondere unter Klemmen eines Flanschs eines Düsenrings und gegebenenfalls eines Flanschs eines Hitzeschildes zwischen dem Flansch des Turbinengehäuses und dem Flansch des Lagergehäuses.

Das Turbinengehäuse ist mit dem zu entspannenden ersten Medium gefüllt, insbesondere mit zu entspannendem Abgas. Das Turbinenzuströmgehäuse des Turbinengehäuses leitet das Abgas in Richtung auf den Turbinenrotor. Im Turbinenzuströmgehäuse besteht ein Überdruck gegenüber der Umgebung, der in der Turbine unter Gewinnung von Energie bei der Entspannung des ersten Mediums abgebaut wird. Im Bereich der Verbindungsstelle von Turbinengehäuse bzw. Turbinenzuströmgehäuse und Lagergehäuse kann es zu einer Leckage kommen, sodass das erste, in der Turbine zu entspannende Medium über den Verbindungsbereich zwischen Turbinengehäuse und Lagergehäuse in die Umgebung gelangen kann. Dies ist von Nachteil.

Um einer derartigen Leckage des in der Turbine zu entspannenden ersten Mediums entgegenzuwirken, wird in der Praxis die Verspannung zwischen Turbinengehäuse bzw. Turbinenzuströmgehäuse und Lagergehäuse erhöht, insbesondere über höhere Anzugsmomente für die Befestigungsmittel, über welche die vorzugsweise als Spannpratze ausgebildete Befestigungseinrichtung am Turbinengehäuse montiert ist. Hierdurch erhöht sich auch eine Klemmkraft zwischen der Befestigungseinrichtung und dem Lagergehäuse. Eine Kontaktstelle zwischen dem Lagergehäuse und der Befestigungseinrichtung ist infolge der unterschiedlichen thermischen Ausdehnungen von Lagergehäuse und Turbinengehäuse bzw. Turbinenzuströmgehäuse hohen Relativbewegungen ausgesetzt.

Turbolader mit in Axialrichtung aneinander anliegenden Dichtflächen sind zudem aus den Dokumenten EP 1 988 261 A1, US 2006 / 034 684 A1, EP 1 428 983 A1, EP 0 080 810 A1, JP S59 32 131 U, WO 2011 1 139 582 A2 und JP H01 111 144 U und der JP 2012 117483 A bekannt.

Hiervon ausgehend liegt der vorliegenden Erfindung die Aufgabe zugrunde, einen neuartigen Turbolader mit verbesserter Flanschverbindung zu schaffen.

Diese Aufgabe wird durch einen Turbolader nach Anspruch 1 gelöst.

Erfindungsgemäß ist zwischen dem Flansch des Turbinengehäuses und dem Flansch des Düsenrings, der zwischen dem Flansch des Turbinengehäuses und dem Flansch des Lagergehäuses geklemmt ist, ein axialer Dichtbereich zwischen aneinander anliegen axialen Dichtflächen der Flansche von Turbinengehäuse und Düsenring ausgebildet, wobei mindestens einer dieser axialen Dichtflächen eine von einer ebenen Kontur abweichende Kontur aufweist.

Hiermit ist eine besonders vorteilhafte Abdichtung der Verbindungsstelle von Turbinengehäuse bzw. Turbinenzuströmgehäuse und Lagergehäuse möglich. Es wird die Gefahr reduziert, dass in der Turbine zu entspannende Medium über den Verbindungsbereich zwischen Turbinengehäuse und Lagergehäuse in die Umgebung gelangt.

Erfindungsgemäß ist an der axialen Dichtfläche des Flanschs des Turbinengehäuses ein Vorsprung ausgebildet der in eine Ausnehmung in der axialen Dichtfläche des Flanschs des Düsenrings eingreift.

Der Vorsprung und die Ausnehmung bilden in einer vorteilhaften Weiterbildung eine Labyrinth-Dichtung aus. Bei unterschiedlicher thermischer Ausdehnungen von Lagergehäuse und Turbinengehäuse bzw. Turbinenzuströmgehäuse und Düsenring drückt der Vorsprung in die Ausnehmung und verstärkt die Dichtwirkung der ausgebildeten Labyrinth-Dichtung. Es wird die Gefahr reduziert, dass in der Turbine zu entspannende Medium über den Verbindungsbereich zwischen Turbinengehäuse und Lagergehäuse in die Umgebung gelangt.

Eine nicht zur Erfindung gehörende Alternative weist ausschließlich eine der beiden axialen Dichtflächen eine von einer ebenen Kontur

abweichende Kontur auf, wohingegen die andere der beiden axialen Dichtflächen eine ebene Kontur aufweist. Hierbei ist dann die axiale Dichtfläche des Flanschs des Turbinengehäuses in Richtung auf die eben konturierte axiale Dichtfläche des Flanschs des Düsenrings konvex nach außen gewölbt. Alternativ dazu ist die axiale Dichtfläche des Flanschs des Düsenrings in Richtung auf die eben konturierte axiale Dichtfläche des Flanschs des Turbinengehäuses konvex nach außen gewölbt. Bei unterschiedlicher thermischer Ausdehnungen von Lagergehäuse und Turbinengehäuse bzw. Turbinenzuströmgehäuse und Düsenring, insbesondere bei thermischer Verformung des Düsenrings, kann eine gute Dichtwirkung im Verbindungsbereich zwischen Turbinengehäuse und Lagergehäuse gewährleistet werden. Es wird die Gefahr reduziert, dass in der Turbine zu entspannende Medium über den Verbindungsbereich zwischen Turbinengehäuse und Lagergehäuse in die Umgebung gelangt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen ausschnittsweisen Querschnitt durch einen nicht zur Erfindung gehörenden Turbolader im Bereich einer Verbindung eines Turbinengehäuses mit einem Lagergehäuse; und
- Fig. 2:: einen ausschnittsweisen Querschnitt durch einen erfindungsgemäßen Turbolader im Bereich einer Verbindung eines Turbinengehäuses mit einem Lagergehäuse.

Die Erfindung betrifft einen Turbolader.

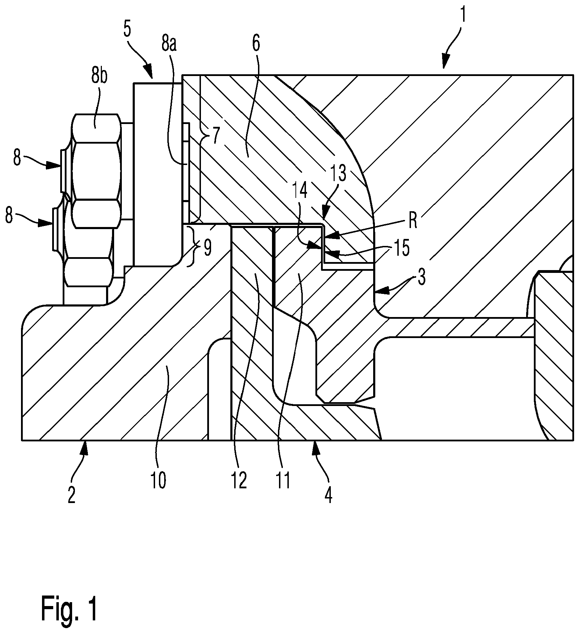

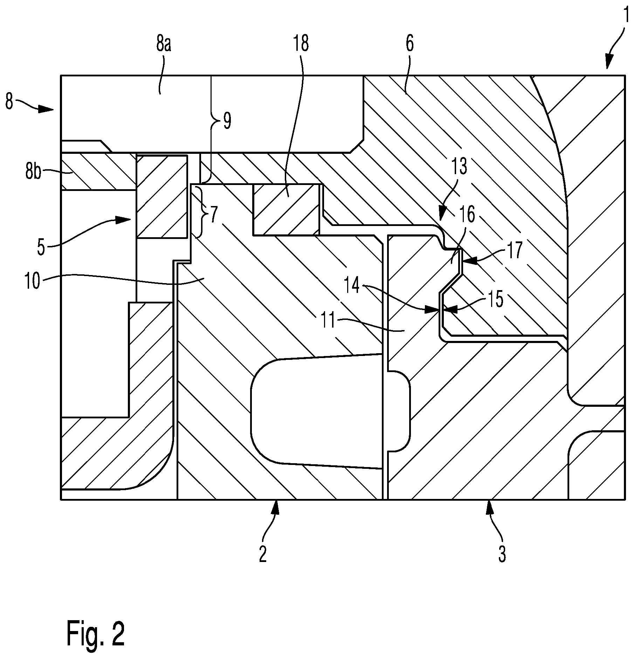

Ein Turbolader verfügt über eine Turbine zur Entspannung eines ersten Mediums, insbesondere zur Entspannung von Abgas einer Brennkraftmaschine. Ferner verfügt ein Turbolader über einen Verdichter zur Verdichtung eines zweiten Mediums, insbesondere von Ladeluft, und zwar unter Nutzung von in der Turbine bei der Entspannung des ersten Mediums gewonnener Energie. Die Turbine verfügt dabei über ein Turbinengehäuse und einen Turbinenrotor. Der Verdichter verfügt über ein Verdichtergehäuse und einen Verdichterrotor. Der Verdichterrotor ist mit dem Turbinenrotor über eine Welle gekoppelt, die in einem Lagergehäuse gelagert ist, wobei das Lagergehäuse zwischen dem Turbinengehäuse und dem Verdichtergehäuse positioniert und sowohl mit dem Turbinengehäuse und dem Verdichtergehäuse verbunden ist. Dieser grundsätzliche Aufbau eines Turboladers ist dem hier angesprochenen Fachmann geläufig. Die Erfindung betrifft nun solche Details eines Turboladers, die die Verbindung von Turbinengehäuse einer vorzugsweise als Radialturbine ausgebildeten Turbine und Lagergehäuse betreffen. Nachfolgend werden unter Bezugnahme auf Fig. 1 und 2 unterschiedliche Ausführungsbeispiele von Turboladern beschrieben, wobei Fig. 1 und 2 jeweils entsprechende Ausschnitte aus einem Turbolader im Bereich der Verbindung des Turbinengehäuses mit dem Lagergehäuse zeigen.

Ein erstes Ausführungsbeispiel eines Turboladers zeigt Fig. 1, wobei in Fig. 1 die Verbindungsstelle zwischen einem Turbinengehäuse, nämlich einem Turbinenzuströmgehäuse 1 des Turbinengehäuses, und einem Lagergehäuse 2 des Abgasturboladers gezeigt ist. Ferner zeigt Fig. 1 einen Düsenring 3 und ein Hitzeschild 4. Das Turbinenzuströmgehäuse 1 ist mit dem Lagergehäuse 2 über eine Befestigungseinrichtung 5 derart verbunden, dass die Befestigungseinrichtung 5 an einem Flansch 6 des Turbinenzuströmgehäuses 1 mit einem ersten Abschnitt 7 montiert ist, und zwar über mehrere Befestigungsmittel 8, und dass die Befestigungseinrichtung 5 mit einem zweiten Abschnitt 9 einen Flansch 10 des Lagergehäuses 2 zumindest abschnittsweise überdeckt. Die Befestigungseinrichtung 5 wird auch als Spannpratze bezeichnet und verspannt das Turbinenzuströmgehäuse 1 und Lagergehäuse 2 miteinander. Die Befestigungseinrichtung 5 kann in Umfangsrichtung gesehen segmentiert sein.

Im in Fig. 1 und 2 gezeigten Ausführungsbeispiel umfasst jedes Befestigungsmittel 8 eine in den Flansch 6 des Turbinenzuströmgehäuses 1 eingeschraubte Gewindeschraube 8a sowie eine an dem anderen Ende der Gewindeschraube 8a angreifende Mutter 8b, wobei durch Anziehen der Muttern 8b eine definierte Vorspannkraft über die Befestigungseinrichtung 5 auf das Turbinenzuströmgehäuse 1 und auf das Lagergehäuse 10 aufgebracht werden kann. Hierbei werden ein Flansch 11 von Düsenring 3 und ein Flansch 12 vom Hitzeschild 4 zwischen dem Flansch 6 von Turbinenzuströmgehäuse 1 und dem Flansch 10 des Lagergehäuses 2 geklemmt.

Bei dem Turbolader der Fig. 1 ist zur Abdichtung des Verbindungsbereichs zwischen Turbinenzuströmgehäuse 1 und Lagergehäuse 2 vorgesehen, dass zwischen dem Flansch 6 des Turbinenzuströmgehäuses 1 und dem Flansch 11 des Düsenrings 3 ein axialer Dichtbereich 13 zwischen aneinander anliegenden axialen Dichtflächen 14, 15 der Flansche 6, 11 von Turbinenzuströmgehäuse 1 und Düsenring ausgebildet ist. Mindestens eine dieser axialen Dichtflächen 14, 15, also die axiale Dichtfläche 14 des Flanschs 11 des Düsenrings 3 und/oder die axiale Dichtfläche 15 des Flanschs 6 des Turbinenzuströmgehäuses 1, weist eine von einer ebenen Kontur abweichende Kontur auf. Hiermit kann bei einer unterschiedlichen thermischen Ausdehnung von Turbinenzuströmgehäuse 1, Lagergehäuse 2 und Düsenring 3 eine besonders vorteilhafte Abdichtung des Verbindungsbereichs zwischen Turbinenzuströmgehäuse 1 und Lagergehäuse 2 bereitgestellt werden, nämlich im Bereich des axialen Dichtbereichs 13 zwischen Turbinenzuströmgehäuse 1 und Düsenring 3.

Im Ausführungsbeispiel der Fig. 1 weist eine der beiden axialen Dichtflächen 14, 15 eine von einer ebenen Kontur abweichende Kontur auf, wohingegen die andere der beiden axialen Dichtflächen 15 oder 14 eine ebene Kontur aufweist. Vorzugsweise ist diejenige Dichtfläche 14, 15, welche die von der ebenen Kontur abweichende Kontur aufweist, in Richtung auf die andere, eben konturierte axiale Dichtfläche konvex nach außen hin gewölbt.

Im Ausführungsbeispiel der Fig. 1 ist die Dichtfläche 15 am Flansch 6 des Turbinenzuströmgehäuses 1 in Richtung auf die eben konturierte axiale Dichtfläche 14 des Flanschs 11 des Düsenrings 3 konvex nach außen gewölbt, und zwar mit dem Wölbungsradius R. Obwohl nicht bevorzugt, ist es auch möglich, einen derartigen Wölbungsradius alternativ an der Dichtfläche 14 des Flanschs 11 des Düsenrings 3 vorzusehen, die dann konvex nach außen in Richtung auf die dann eben konturierte axiale Dichtfläche des Flanschs 6 des Turbinenzuströmgehäuses 1 gewölbt ist.

Dem Ausführungsbeispiel der Fig. 1 liegt die Erkenntnis zugrunde, dass sich im Betrieb der Düsenring 3 thermisch verformt und hierdurch die zur Dichtung notwendige Flächenpressung zwischen Düsenring 3 und Turbinenzuströmgehäuse 1 nicht mehr aufrechterhalten werden kann. Die thermische Verformung des Düsenrings wird durch die konvexe Wölbung insbesondere der Dichtfläche 15 des Flanschs 6 des Lagergehäuses 1 gezielt genutzt, und zwar derart, dass sich an dieser konvex gewölbten Dichtfläche 15 des Flanschs 6 des Turbinenzuströmgehäuses 1 die Dichtfläche 14 des Flanschs 11 des Düsenrings 3 rollen kann, wodurch dann ein durchgängiger Linienkontakt zwischen den einander zugewandten Dichtflächen 14, 15 der Flansche 6, 11 von Turbinenzuströmgehäuse 1 und Düsenring 3 gewährleistet werden kann, sodass keine Gefahr besteht, dass über diesen Verbindungsbereich Abgas in die Umgebung gelangt.

Fig. 2 zeigt ein Ausführungsbeispiel der Erfindung, wobei sich der Turbolader der Fig. 2 vom Turbolader der Fig. 1 insbesondere dadurch unterscheidet, dass bei dem in Fig. 2 gezeigten Turbolader zwischen dem Flansch 10 des Lagergehäuses 2 und dem Flansch 6 des Turbinenzuströmgehäuses 1 ausschließlich der Flansch 11 des Düsenrings 3 geklemmt ist, jedoch nicht wie in Fig. 1 der Hitzeschild 4 mit seinem Flansch 12.

Ein weiterer Unterschied zwischen dem Ausführungsbeispiel der Fig. 2 und dem Ausführungsbeispiel der Fig. 1 besteht darin, dass im Ausführungsbeispiel der Fig. 2 beide axialen Dichtflächen 14, 15 der Flansche 6, 11 von Turbinenzuströmgehäuse 1 und Düsenring 3 eine von einer ebenen Kontur abweichende Kontur aufweisen.

So ist im Ausführungsbeispiel der Fig. 2 vorgesehen, dass an der axialen Dichtfläche 14 des Flanschs 11 des Düsenrings 3 ein Vorsprung 16 ausgebildet ist, der in eine korrespondierende Ausnehmung 17 in der axialen Dichtfläche 15 des Flanschs 6 des Turbinenzuströmgehäuses 1 eingreift. Der Vorsprung 16 ist dabei im Querschnitt nasenartig konturiert und läuft in Umfangsrichtung um. Durch das Ineinandergreifen des Vorsprungs 16 in die in Umfangsrichtung umlaufende Ausnehmung 17 wird eine Art Labyrinth-Dichtung ausgebildet. Bei unterschiedlicher thermischer Ausdehnung von Turbinenzuströmgehäuse 1, Düsenring 3 und Lagergehäuse 2 wird der Vorsprung 16 in die Nut 17 gedrückt und verstärkt die Dichtwirkung im axialen Dichtbereich 13.

Obwohl nicht bevorzugt, ist es auch möglich, den in Fig. 2 an der Dichtfläche 14 des Flanschs 11 des Düsenrings 3 vorgesehenen Vorsprung 16 im Bereich der Dichtfläche 15 des Flanschs 6 des Turbinenzuströmgehäuses 1 vorzusehen, wobei dann in diesem Fall die entsprechend konturierte Ausnehmung an der Dichtfläche 14 des Flanschs 11 des Düsenrings 3 ausgebildet ist.

Im Ausführungsbeispiel der Fig. 2 ist zwischen dem Flansch 10 des Lagergehäuses 2 und dem Flansch 6 des Turbinenzuströmgehäuses 1 ein weiteres Dichtelement 18 angeordnet, um den Verbindungsbereich zwischen Turbinenzuströmgehäuse 1 und Lagergehäuse 2 weiter abzudichten. Dabei handelt es sich vorzugsweise um ein metallisches Dichtelement 18, so zum Beispiel um einen metallischen O-Ring oder metallischen C-Ring. Ferner kann das Dichtelement 18 auch aus Grafit bestehen.

Das Dichtelement 18 der Fig. 2, welches zwischen den Flanschen 6, 10 von Turbinenzuströmgehäuse 1 und Lagergehäuse 2 positioniert ist und sowohl in axialer als auch in radialer Richtung dichtet, kann auch beim Turbolader der Fig. 1 zum Einsatz kommen.

Beiden Ausführungsbeispielen der Fig. 1 und 2 ist gemeinsam, dass zwischen dem Flansch 6 des Turbinenzuströmgehäuses 1 und dem Flansch 11 des Düsenrings 3 der axiale Dichtbereich 13 ausgebildet ist, in welchem axiale Dichtflächen 14, 15 der Flansche 6, 11 von Turbinenzuströmgehäuse 1 und Düsenring aneinander anliegen. Insbesondere besteht zwischen diesen axialen Dichtflächen 14, 15 ein metallischer Flächenkontakt. Mindestens einer dieser axialen Dichtflächen 14, 15 der Flansche 6, 11 von Turbinenzuströmgehäuse 1 und Düsenring 3 weist eine von einer ebenen Kontur abweichende Kontur auf. Besonders bevorzugt ist die Variante der Fig. 2, in welcher beide axialen Dichtflächen 14, 15 eine von der ebenen Kontur abweichende Kontur aufweisen, nämlich derart, dass ein an der axialen Dichtfläche 14 des Flansches 11 des Düsenrings 3 ausgebildeter, umlaufender Vorsprung 16 in eine entsprechend konturierte Ausnehmung 17 eingreift, die in die Dichtfläche 15 des Flanschs 6 des Turbinenzuströmgehäuses 1 angebracht ist.

### Bezugszeichenliste

- 1: Turbinenzuströmgehäuse
- 2: Lagergehäuse
- 3: Düsenring
- 4: Hitzeschild
- 5: Befestigungseinrichtung
- 6: Flansch
- 7: Abschnitt
- 8: Befestigungsmittel
- 8a: Schraube
- 8b: Mutter
- 9: Abschnitt
- 10: Flansch
- 11: Flansch
- 12: Flansch
- 13: Dichtbereich
- 14: Dichtfläche
- 15: Dichtflache
- 16: Vorsprung
- 17: Ausnehmung
- 18: Dichtelement

## Patentansprüche

1. Turbolader,
mit einer Turbine zur Entspannung eines ersten Mediums,
mit einem Verdichter zur Verdichtung eines zweiten Mediums unter Nutzung von in der Turbine bei Entspannung des ersten Mediums gewonnener Energie,
wobei die Turbine ein Turbinengehäuse (1) und einen Turbinenrotor aufweist,
wobei der Verdichter ein Verdichtergehäuse und einen mit dem Turbinenrotor über eine Welle gekoppelten Verdichterrotor aufweist,
wobei das Turbinengehäuse (1) und das Verdichtergehäuse jeweils mit einem zwischen denselben angeordneten Lagergehäuse (2), in welchem die Welle gelagert ist, verbunden sind,
wobei das Turbinengehäuse (1) und das Lagergehäuse (2) über eine Befestigungseinrichtung (5) derart verbunden sind, dass die Befestigungseinrichtung an einem Flansch (6) des Turbinengehäuses (1) mit einem ersten Abschnitt (7) montiert ist und mit einem zweiten Abschnitt (9) einen Flansch (10) des Lagergehäuses (2) zumindest abschnittsweise überdeckt,
wobei zwischen dem Flansch (6) des Turbinengehäuses (1) und dem Flansch (10) des Lagergehäuses (2) zumindest ein Flansch (11) eines Düsenrings (3) geklemmt ist, und wobei zwischen dem Flansch (6) des Turbinengehäuses (1) und dem Flansch (11) des Düsenrings (3) ein axialer Dichtbereich (13) zwischen aneinander anliegen axialen Dichtflächen (14, 15) dieser Flansche (6, 11) ausgebildet ist,
**dadurch gekennzeichnet, dass**
an der axialen Dichtfläche (14) des Flansches (11) des Düsenrings (3) und/oder an der axialen Dichtfläche (15) des Flansches (6) des Turbinengehäuses (1) jeweils ein Vorsprung ausgebildet ist, der in eine Ausnehmung in der jeweils anderen axialen Dichtfläche (14, 15) eingreift
, wobei der Vorsprung (16) und die Ausnehmung (17) eine Labyrinth-Dichtung ausbilden, **wobei bei unterschiedlicher thermischer Ausdehnung von Turbinenzuströmgehäuse (1), Düsenring (3) und Lagergehäuse (2) wird der Vorsprung (16) in die Nut (17) gedrückt und verstärkt die Dichtwirkung im axialen Dichtbereich (13).**

2. Turbolader nach einem der Ansprüche 1, **dadurch gekennzeichnet, dass** die aneinander anliegen axialen Dichtflächen (14, 15) des Flanschs (6) des Turbinengehäuses (1) und des Flansch (11) des Düsenrings (3) in metallischem Flächenkontakt stehen.

3. Turbolader nach einem der Ansprüche 1 bis 3, **dadurch gekennzeichnet, dass** die Turbine eine Radialturbine ist.

## Claims

1. A turbocharger,
having a turbine for expanding a first medium,
having a compressor for compressing a second medium utilising energy extracted from the turbine during the expansion of the first medium,
wherein the turbine comprises a turbine housing (1) and a turbine rotor,
wherein the compressor comprises a compressor housing and a compressor rotor coupled to the turbine rotor via a shaft,
wherein the turbine housing (1) and the compressor housing are each connected to a bearing housing (2) arranged between the same, in which the shaft is mounted,
wherein the turbine housing (1) and the bearing housing (2) are connected to one another via a fastening device (5) in such a manner that the fastening device is mounted to a flange (6) of the turbine housing (1) with a first portion (7) and with a second portion (9) overlaps a flange (10) of the bearing housing (2) at least in portions,
wherein between the flange (6) of the turbine housing (1) and the flange (10) of the bearing housing (2) at least one flange (11) of a nozzle ring (3) is clamped, and wherein between the flange (6) of the turbine housing (1) and the flange (11) of the nozzle ring (3) an axial sealing region (13) between axial sealing faces (14, 15) of these flanges (6, 11) lying against one another is formed,
**characterised in that**
on the axial sealing face (14) of the flange (11) of the nozzle ring (3) and/or on the axial sealing face (15) of the flange (6) of the turbine housing (1), a projection each is formed which engages in a recess in the respective other axial sealing face (14, 15), wherein the projection (16) and the recess (17) form a labyrinth seal, wherein upon different thermal expansion of turbine inflow housing (1), nozzle ring (3) and bearing housing (2) the projection (16) is pressed into the groove (17) and reinforces the sealing effect in the axial sealing region (13).

2. The turbocharger according to any one of the Claims 1,
**characterised in that**
the sealing faces (14, 15) of the flange (6) of the turbine housing (1) axially lying against one another and of the flange (11) of the nozzle ring (3) are in metallic face contact.

3. The turbocharger according to any one of the Claims 1 to 3,
**characterised in that**
the turbine is a radial turbine.

## Revendications

1. Turbocompresseur,
comportant une turbine pour détendre un premier milieu,
comportant un compresseur pour comprimer un deuxième milieu en utilisant l'énergie obtenue dans la turbine lorsque le premier milieu est détendu, dans lequel la turbine présente un carter de turbine (1) et un rotor de turbine,
dans lequel le compresseur comporte un carter de compresseur et un rotor de compresseur couplé au rotor de turbine via un arbre,
dans lequel le carter de turbine (1) et le carter de compresseur sont chacun reliés à un carter de palier (2) disposé entre eux, dans lequel l'arbre est monté,
dans lequel le carter de turbine (1) et le carter de palier (2) sont reliés via un dispositif de fixation (5) de telle sorte que le dispositif de fixation soit monté sur une bride (6) du carter de turbine (1) avec une première section (7) et avec une deuxième section (9)recouvre au moins partiellement une bride (10) du carter de palier (2),
dans lequel au moins une bride (11) d'un anneau de buse (3) est serrée entre la bride (6) du carter de turbine (1) et la bride (10) du carter de palier (2), et dans lequel entre la bride (6) du carter de turbine (1) et la bride (11) de l'anneau de buse (3) une zone d'étanchéité axiale (13) est réalisée entre des surfaces d'étanchéité axiales adjacentes (14, 15) de cette bride (6, 11),
**caractérisé en ce que**
sur la surface d'étanchéité axiale (14) de la bride (11) de l'anneau de buse (3) et/ou sur la surface d'étanchéité axiale (15) de la bride (6) du carter de turbine (1) est formée respectivement une protubérance, qui s'insère dans un évidement dans l'autre surface d'étanchéité axiale (14, 15),
dans lequel la protubérance (16) et l'évidement (17) forment un joint labyrinthe, dans lequel, en cas de dilatation thermique différente du carter d'entrée de turbine (1), de l'anneau de buse (3) et du carter de palier (2), la protubérance (16) est enfoncée dans la rainure (17) et augmente l'effet d'étanchéité dans la zone d'étanchéité axiale (13).

2. Turbocompresseur selon une des revendications 1, **caractérisé en ce que** les surfaces d'étanchéité axiales en butée (14, 15) de la bride (6) du carter de turbine (1) et de la bride (11) de l'anneau de buse (3) sont dans un support de contact avec une surface métallique.

3. Turbocompresseur selon une des revendications 1 à 3, **caractérisé en ce que** la turbine est une turbine radiale.
